# EUROPEAN PATENT SPECIFICATION

(11) **EP 0 971 148 B1**
(45) Date of publication and mention of the grant of the patent: **28.05.2003**
(21) Application number: 99105261.4
(22) Date of filing: 15.03.1999
(51) Int. Cl.: F16D 65/853, B62L 1/00

(54) **Detachable fluid cooling system for bicycle disk brake**
Demontierbares Flüssigkeitskühlsystem für Fahrrad-Scheibenbremsen
Système détachable de refroidissement fluide pour frein à disque de bicyclette

(30) Priority: 06.07.1998 US 110408; 08.07.1998 US 111708; 08.07.1998 US 111709
(43) Date of publication of application: 12.01.2000
(73) Proprietor: SHIMANO INC., Osaka 590 (JP)
(72) Inventor: Nakamura, Yasushi, Itami-shi, Hyogo (JP)
(74) Representative: GROSSE BOCKHORNI SCHUMACHER

(56) References cited:
- DE-A- 19 807 392
- US-A- 4 391 352
- US-A- 5 445 242
- PATENT ABSTRACTS OF JAPAN vol. 018, no. 363 (M-1635), 8 July 1994 (1994-07-08) & JP 06 094060 A (TOYOTA MOTOR CORP), 5 April 1994 (1994-04-05)
- PATENT ABSTRACTS OF JAPAN vol. 012, no. 160 (M-697), 14 May 1988 (1988-05-14) & JP 62 278330 A (NISSIN KOGYO KK), 3 December 1987 (1987-12-03)
- DATABASE EPODOC [Online] European Patent Office XP002117716 & CN 1 058 570 A (LUO JIANHUA) 12 February 1992 (1992-02-12)

## Description

### BACKGROUND OF THE INVENTION

### 1. Field of the Invention

The present invention relates to a detachable fluid cooling system, which is adapted to be coupled to a disc brake of a bicycle.

### 2. Background Information

Bicycling is becoming an increasingly popular form of recreation as well as a means of transportation. Moreover, bicycling has become a very popular competitive sport. Whether the bicycle is used for recreation, transportation or competition, the bicycle industry is constantly improving their components. One particular component of the bicycle which has been extensively redesigned over the past years is the braking systems of bicycles.

There are several types of bicycle brake devices, which are currently available on the market. Examples of some types of common bicycle brake devices include rim brakes, caliper brakes and disc brakes. If a rider wants a very high performance brake system, then the rider typically wants a disc brake system. Disc brake systems provide a substantial braking power in relationship to the amount of braking force applied to the brake lever. Moreover, disc brake systems typically provide a high level of consistency in all types of weather and riding conditions. However, one problem with disc brakes is that the hydraulic or actuating fluid can become overheated such that vapor-lock occurs. In other words, the heat generated by braking results in the hydraulic fluid increasing in volume so as to cause the brake pads to engage the brake disc even when the brake lever is in the release position. When vapor-lock occurs, the bicycle wheels can lock up and throw the rider off of the bicycle.

In the prior art disc brake systems, several methods have been utilized to avoid vapor-lock. For example, the caliper housing can be made larger to absorb more heat Another method has been to make a larger brake disc with a wider surface area. Also, vapor-lock can be suppressed by utilizing high quality hydraulic fluid. Yet another method to avoid vapor-lock has been to use brake or friction pads which do not transfer the heat to the brake housing as readily as conventional friction pads. These prior art methods of avoiding vapor-lock have many problems. One particular problem, is that these solutions often are expensive to manufacture. Also, some of these prior art solutions are not completely effective.

In view of the above, there exists a need for a fluid cooled disc brake for a bicycle which overcomes the above-mentioned problems in the prior art. This invention addresses these needs in the prior art as well as other needs, which will become apparent to those skilled in the art from this disclosure.

### SUMMARY OF THE INVENTION

One object of the present invention is to provide a bicycle disc brake with a fluid cooling system.

Another object of the present invention is to provide a bicycle disc brake with a fluid cooling system, which is replaceable and detachable

Another object of the present invention is to provide an improved bicycle disc brake, which is reliable and durable.

The foregoing objects of the present invention can be attained by providing a detachable fluid cooling system for a bicycle disc brake caliper, comprising: an attachment portion sized to be detachable coupled to the bicycle disc brake caliper; and a coolant portion coupled to said attachment portion to contact the bicycle disc brake caliper for transferring heat from the bicycle disc brake caliper, said coolant portion having an internal coolant area for containing coolant.

In one embodiment, the cooling system includes a pump and a reservoir. In another embodiment, a coolant or water bottle is attached to the coolant member for manually adding coolant thereto. In another embodiment, the coolant member is filled with a high specific heat gel. Yet in other embodiments, the coolant member is adjustable to be oriented with its outlet opening substantially perpendicular to the ground.

Other objects, advantages and salient features of the present invention will become apparent to those skilled in the art from the following detailed description, which, taken in conjunction with the annexed drawings discloses preferred embodiments of the present invention.

### BRIEF DESCRIPTION OF THE DRAWINGS

Referring now to the attached drawings which form a part of this original disclosure:
Figure 1 is a side elevational view of a portion of a bicycle with a fluid cooled bicycle disc brake assembly coupled thereto in accordance with one embodiment of the present invention;
Figure 2 is a partial side elevational view of a portion of the front fork of the bicycle with the radiator, motor and pump of the cooling system coupled thereto in accordance with the embodiment of the present invention illustrated in Figure 1;
Figure 3 is a partial front elevational view of a portion of the front fork of the bicycle with the radiator, motor and pump of the cooling system coupled thereto in accordance with the embodiment of the present invention illustrated in Figure 1;
Figure 4 is a partial cross-sectional view of the radiator, motor and pump of the cooling system coupled to a portion of the front fork of the bicycle in accordance with the embodiment of the present invention illustrated in Figure 1;
Figure 5 is a partial side elevational view of a portion of the fluid cooled bicycle disc brake assembly coupled to the front fork of the bicycle in accordance with the embodiment of the present invention illustrated in Figure 1;
Figure 6 is a side elevational view of a bicycle disc brake caliper of the fluid cooled bicycle disc brake assembly in accordance with the embodiment of the present invention illustrated in Figure 1;
Figure 7 is an exploded front elevational view of the bicycle disc brake caliper of the fluid cooled bicycle disc brake assembly in accordance with the embodiment of the present invention illustrated in Figure 1;
Figure 8 is an inside elevational view of a first housing half of the bicycle disc brake caliper of the fluid cooled bicycle disc brake assembly in accordance with the embodiment of the present invention illustrated in Figure 1;
Figure 9 is an inside elevational view of a second housing half of the bicycle disc brake caliper of the fluid cooled bicycle disc brake assembly in accordance with the embodiment of the present invention illustrated in Figure 1;
Figure 10 is a top plan view of a bicycle brake operating device for the fluid cooled bicycle disc brake assembly in accordance with the embodiment of the present invention illustrated in Figure 1;
Figure 11 is a schematic diagram of the fluid cooled bicycle disc brake assembly in accordance with the embodiment of the present invention illustrated in Figure 1;
Figure 12 is an inside elevational view of a modified first housing half of the bicycle disc brake caliper of the fluid cooled bicycle disc brake assembly in accordance with another embodiment of the present invention;
Figure 13 is an inside elevational view of a modified second housing half of the bicycle disc brake caliper of the fluid cooled bicycle disc brake assembly in accordance with the embodiment of the present invention illustrated in Figure 12;
Figure 14 is a side elevational view of selected parts of a fluid cooled bicycle disc brake assembly in accordance with another embodiment of the present invention;
Figure 15 is a side elevational view of a bicycle disc brake caliper with a closed coolant chamber or member in accordance with another embodiment of the present invention;
Figure 16 is a side elevational view of a bicycle disc brake caliper with a refillable coolant chamber or member in accordance with another embodiment of the present invention;
Figure 17 is a side elevational view of a bicycle disc brake caliper with a replaceable coolant chamber or member in accordance with another embodiment of the present invention;
Figure 18 is a side elevational view of replaceable coolant chamber or member illustrated in Figure 17; and
Figure 19 is a side elevational view of a bicycle disc brake caliper with an adjustable and replaceable coolant chamber or member in accordance with another embodiment of the present invention.

### DETAILED DESCRIPTION OF THE PREFERRED EMBODIMENTS

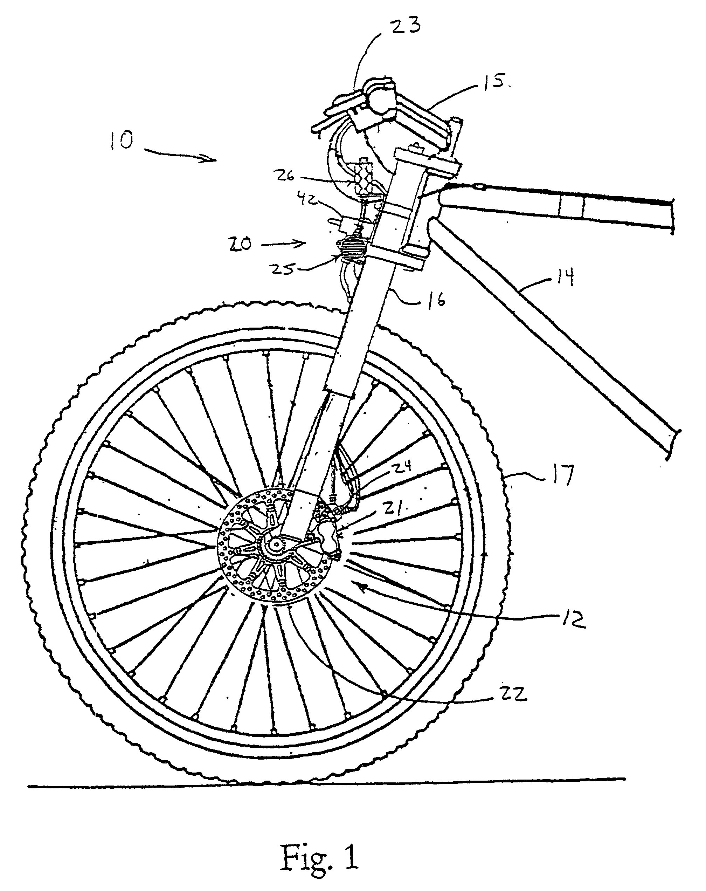

Referring initially to Figure 1, a front portion of a bicycle 10 is illustrated with a fluid cooled disc brake assembly 12 coupled thereto in accordance with one embodiment of the present invention. Bicycles such as bicycle 10 are well known in the art, and thus, bicycle 10 and its various components will not be discussed or illustrated in detail herein. It will be apparent to those skilled in the art that bicycle 10 can be any type of bicycle, e.g., mountain bike, a hybrid bike or a road bike. Bicycle 10 is a conventional bicycle, which basically includes a bicycle frame 14 with a handle bar 15, front and rear forks 16 (only front fork shown), front and rear wheels 17 (only front wheel shown) and a drive train (not shown).

While only the front portion of bicycle 10 is illustrated as having a fluid cooled disc brake assembly 12, it will be apparent to those skilled in the art from this disclosure that a second fluid cooled disc brake assembly 12 can be utilized for stopping the rear wheel of bicycle 10. Moreover, it will also be apparent to those skilled in the art from this disclosure that various changes and modifications can be made from the embodiments disclosed herein without departing from the scope of the invention as defined in the appended claims.

Fluid cooled disc brake assembly 12 basically includes a cooling system 20, a disc brake caliper 21, a disc brake 22 and a brake operating mechanism 23. Cooling system 20 is basically mounted on the front fork 16 of bicycle 12. Likewise, disc brake caliper 21 is also mounted on front fork 16 of bicycle 12 adjacent brake disc 22. Brake disc 22 is fixedly coupled to front wheel 17 for rotation therewith. Brake operating mechanism 23 is preferably fixedly mounted on handle bar 15 adjacent the hand portion of handle bar 15. Accordingly, brake operating mechanism 23 is operated such that disc brake caliper 21 moves from a release position in which bicycle wheel 17 and brake disc 22 are free to rotate, and a braking position in which disc brake caliper 21 applies a braking force against brake disc 22 to stop rotation of bicycle wheel 17 and brake disc 22. Cooling system 20 is preferably designed to prevent vapor lock from occurring within disc brake caliper 21. Specifically, cooling system 20 is preferably designed to act as a coolant heat sink that transfers heat from disc brake caliper 21.

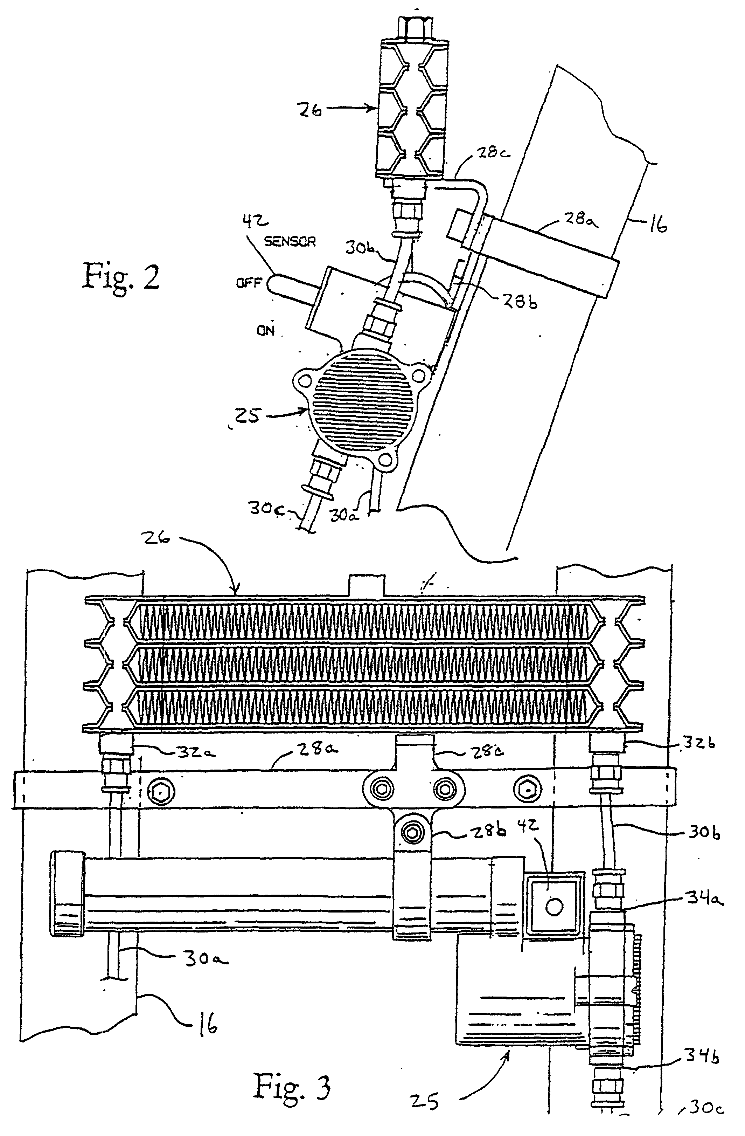

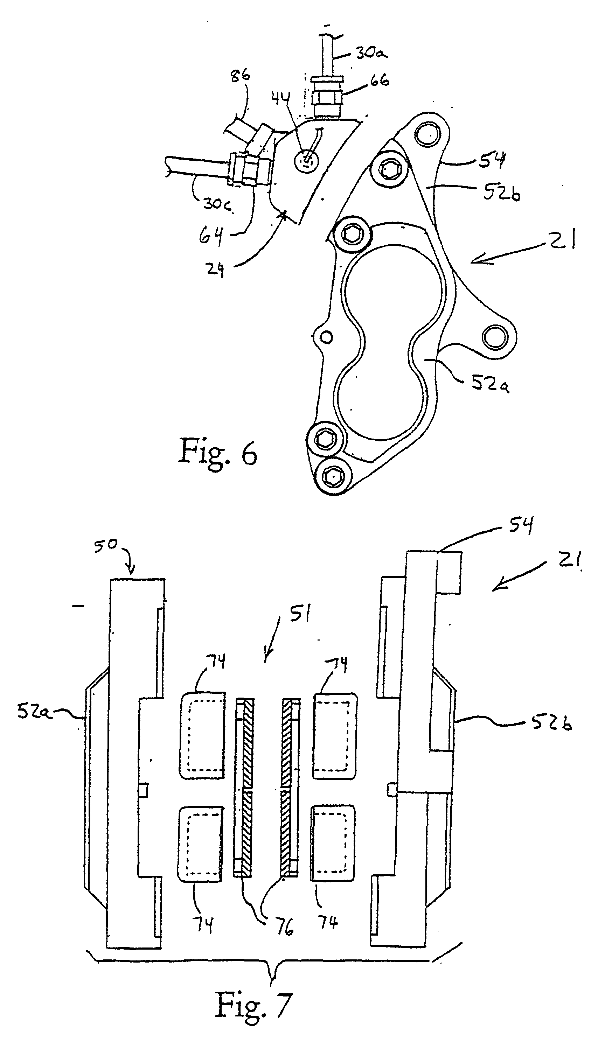

Turning now to Figures 3-6, a portion of cooling system 20 is illustrated in more detail. Cooling system 20 basically includes a coolant member 24 (Figure 6), pump 25 and radiator 26. In this embodiment, coolant member 24 is a detachable and replaceable member, which is fixedly coupled to disc brake caliper 21 to create a coolant heat sink which transfers heat away from disc brake caliper 21 as explained below in more detail. Of course, it will be apparent to those skilled in the art from this disclosure that coolant member 24 integrally formed with a portion of disc brake caliper 21 to create a coolant heat sink which transfers heat away from disc brake caliper 21. Coolant member 24 will be discussed in more detail below together with the description of disc brake caliper 21.

Preferably, pump 25 and radiator 26 are mounted to front fork 16 of bicycle 10 by a mounting bracket assembly. The mounting bracket assembly includes a cross-strap 28a and a pair of intermediate straps 28b and 28c. Accordingly, pump 25 and radiator 26 are mounted as a compact unit on fork 16.

Pump 25 is preferably a rotary pump which moves coolant through coolant member 24 and radiator 26. In particular, as seen in Figures 3-6, a first flexible conduit 30a extends from coolant member 24 to an inlet opening 32a of radiator 26, a second flexible conduit 30b extends from an outlet opening 32b of radiator 26 to an inlet opening 34a of pump 25, and a third flexible tubing 30c extends from an outlet 34b of pump 25 to coolant member 24. Accordingly, conduits 30a, 30b and 30c form a continuous loop or conduit path between coolant member 24, pump 25 and radiator 26. Coolant is forced through the conduit path by pump 25 for removing heat from coolant member 24 and disc brake caliper 21.

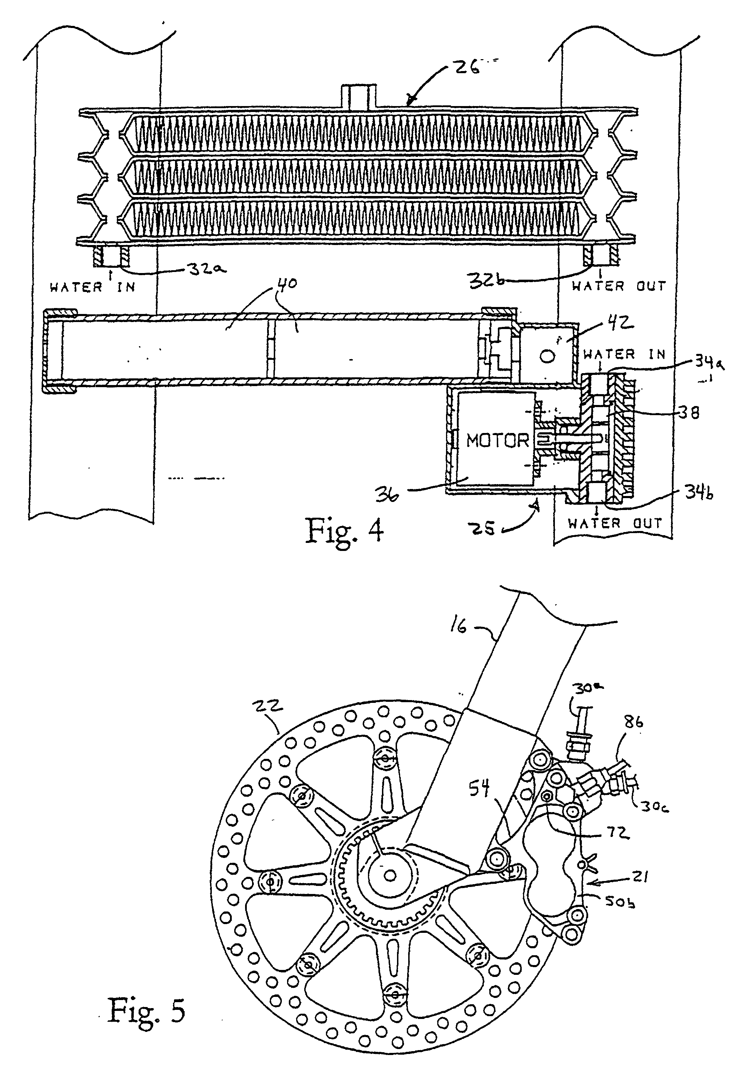

As best shown in Figure 4, pump 25 is preferably operated by a motor 36 which rotates an impeller 38 to force fluid for coolant through pump 25. Motor 36 in the preferred embodiment is an electric motor that is battery operated. More specifically, two conventional batteries 40 are utilized to power motor 36. A three-positioned switch 42 is provided for controlling the operation of motor 36. Specifically, switch 42 has a central off position, an on position and a sensor position. In the off position, motor 36 is idle, and thus, pump 25 is not operated. In the on position, motor 36 turns impeller 38 of pump 25 to force fluid or coolant through the conduit path of cooling system 20. The sensor position operates motor 36 based on the temperature of the coolant or disc brake caliper 21. In particular, as seen in Figure 6, a sensor 44 is mounted to disc brake caliper 21 to determine the temperature of either the coolant or the housing of disc brake caliper 21. Accordingly, switch 42 and motor 36 are electrically coupled to sensor 44 such that motor 36 only operates when the temperature of the coolant and/or housing of disc brake caliper 21 reaches a predetermined temperature level, e.g., greater than 80°C. Once the coolant or disc brake caliper 21 reaches this predetermined temperature level, motor 36 will operate to turn impeller 38 for pumping coolant or fluid through coolant member 24 and radiator 26 to reduce the temperature of caliper 21.

It will be apparent to those skilled in the art that other types of pumping systems, motors and temperature sensors can be utilized in the cooling system 20 of the present invention. For example, a pump can be used in which the pump is operated by rotating parts of the bicycle 10. Moreover, pumps, motors and sensors such as pump 25, motor 36 and sensor 44 are well known in the prior art. Thus, these parts will not be described or illustrated in detail.

Radiator 26 is preferably a conventional type of radiator, which includes a conduit path with a large surface area so as to be air-cooled. Since radiator *26* is relatively conventional in construction, radiator 26 will not be described or illustrated in detail herein.

It will be apparent to those skilled in the art that pump 25 and/or radiator 26 can be eliminated. For example, the conduit path can be set up as a "coffee percolator" such that the coolant is self-circulating through coolant member 24.

Turning now to Figures 5-9, disc brake caliper 21 will now be described in more detail. Disc brake caliper 21 is fixedly coupled to fork 16 adjacent to brake disc 22 for applying a clamping force to stop the rotation of bicycle wheel 17 and brake disc 22. Disc brake caliper 21 basically includes a housing 50, a piston unit 51 and coolant member 24 which is fixedly coupled thereto via fastening means such as adhesive, straps, bolts, rivets or other fasteners. Coolant member 24 is preferably constructed two halves, which are fixedly secured together.

Disc brake caliper 21 is basically a conventional disc brake caliper except that cooling system 20 has been coupled to it for removing heat therefrom. More specifically, except for the addition of coolant member 24 to disc brake caliper 21, the structure and function of disc brake caliper 21 is relatively conventional. Therefore, disc brake caliper 21 will not be discussed or illustrated in detail herein.

As seen in Figures 7-9, housing 50 is preferably constructed of a heat conductive material, which can readily transfer the heat to the coolant. For example, housing 50 can be constructed of aluminum. Housing 50 includes a first housing half 52a and a second housing half 52b which are bolted together in a conventional manner. For all practical purposes, first and second housing halves 52a and 52b are substantially identical in construction, except that second housing half 52b has brake operating mechanism 23 attached thereto for supplying an actuating fluid to first and second housing halves 52a and 52b. Also, second housing half 52b has a pair of outwardly extending flanges that form a mounting member 54 for bolting disc brake caliper 21 to fork 16 of bicycle 10. When housing halves 52a and 52b are bolted together, a disc brake slot is formed therebetween for receiving brake disc 21 therebetween.

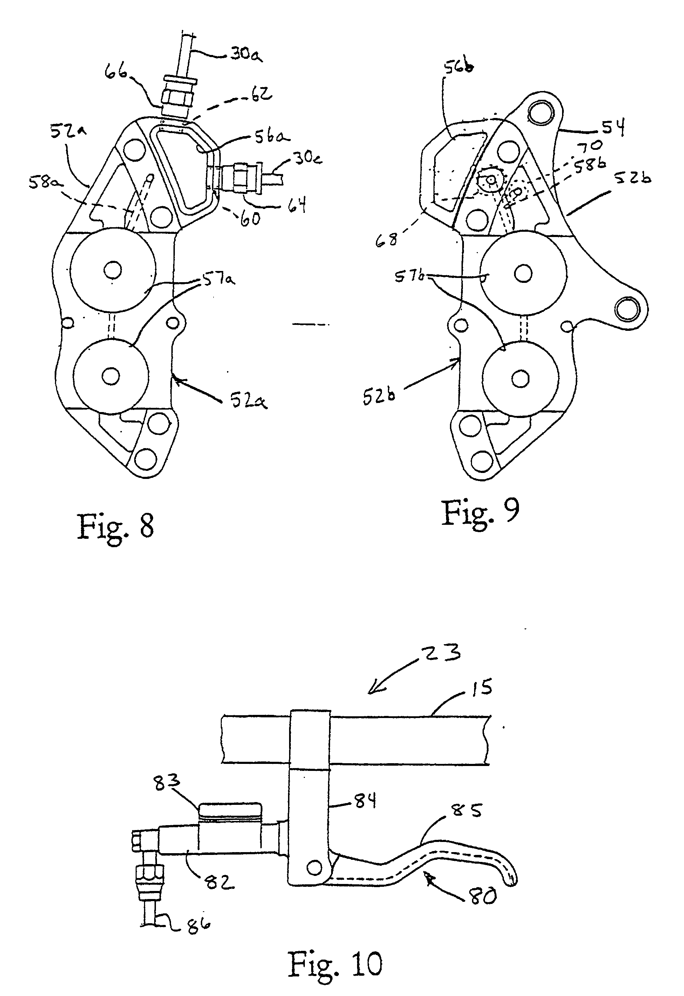

As seen in Figures 8 and 9, first housing half 52a has a pair of circular piston recesses 57a and an internal fluid actuating passage 58a. Likewise, second housing half 52b has a pair of piston receiving recesses 57b and an internal fluid actuating passage 58b. A first half of coolant member 24 is coupled to the first housing half 52a, while a second half of coolant member 24 is coupled to the second housing half 52b. The first half of coolant member 24 has a coolant cavity or area 56a, while a second half of coolant member 24 has a coolant cavity or area 56b. Cavities or areas 56a and 56b form a large coolant chamber. Preferably, coolant member 24 can hold at least approximately ten cubic centimeters to approximately twenty cubic centimeters.

The first half of coolant member 24 has an inlet opening 60 and an outlet opening 62. Inlet opening 60 is preferably a threaded hole, which receives a connector 64 to connect conduit 30c thereto. Outlet opening 62 is also preferably a threaded bore having an outlet connector 66 coupled thereto to connect conduit 30a thereto. Connectors 64 and 66 are preferably provided with one-way valves or check valves that allow the fluid or coolant to pass into coolant cavities 56a and 56b through inlet opening 60 and out of coolant cavities 56a and 56b via outlet opening 62.

Internal fluid actuating passage 58a extends between circular piston recesses 57a and internal fluid actuating passage 58b of second housing half 52b. In other words, the actuating fluid from brake operating mechanism 23 flows into second housing half 52b and then into internal fluid actuating passages 58a and 58b to operate piston unit 51.

Second housing half 52b has a first threaded opening 68, which is in fluid communication with internal fluid actuating passage 58b. Opening 68 is designed for attaching a hydraulic or actuating fluid conduit thereto. A second opening 70 is also provided for threadedly receiving a bleed nipple 72. Opening 70 is in fluid communication with internal fluid actuating passage 58b such that excess air can be removed from the actuating system. Internal fluid actuating passage 58b interconnects piston recesses 57b together for receiving actuating fluid or hydraulic fluid to activate piston unit 51.

As seen in Figure 7, piston unit 51 preferably includes four pistons 74 and a pair of friction pads 76. Pistons 74 are slidably received in piston recesses 57a and 57b for movement between a release position and a braking position. Friction pads 76 are located on the free ends of pistons 74 for movement therewith. In other words, as pistons 74 move from a release position to a braking position, friction pads 76 also move from a release position to a braking position. In the braking position, friction pads 76 frictionally engage brake disc 22 to stop the rotation of brake disc 22 and wheel 17. In the release position, friction pads 76 are spaced from brake disc 22 to allow brake disc 22 and wheel 17 to freely rotate therebetween. Pistons 74 and friction pads 76 are moved from their release positions to their braking positions by actuating or hydraulic fluid applying a force to pistons 74. More specifically, as brake operating mechanism 23 is actuated, actuating fluid is pressurized so as to force pistons 74 and friction pads 76 toward brake disc 22.

When brake caliper 21 is coupled to front fork 16, coolant member 24 is positioned on the downstream end of the disc brake caliper 21. In other words, as seen in Figure 1, brake disc 22 rotates in a counterclockwise direction such that the coolant member 24 is positioned downstream on disc brake caliper 21 in relationship to the rotational direction of brake disc 22. This allows the heat to be removed from the downstream end of brake caliper 21 more quickly since this is the area in which the actuating fluid is being supplied and the area of increased heat.

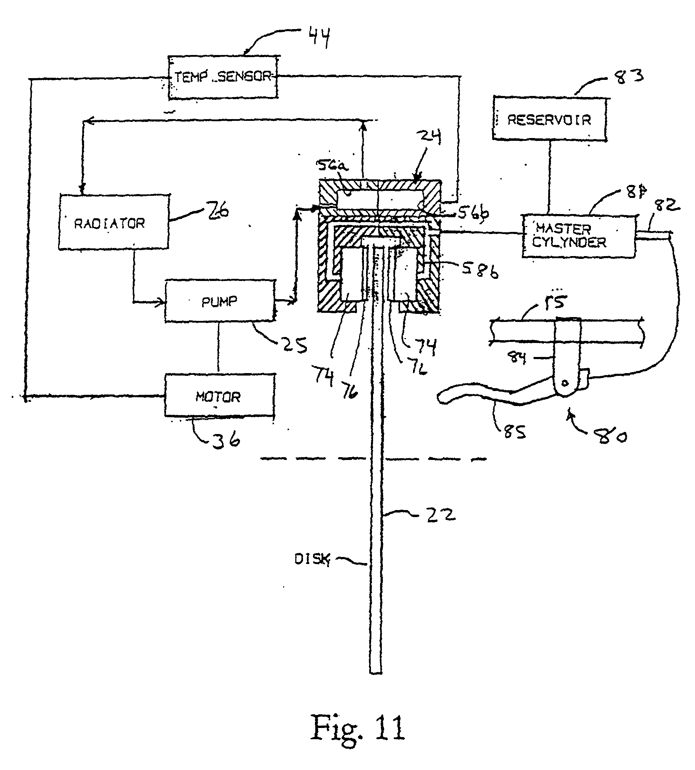

Referring now to Figures 10 and 11, brake operating mechanism 23 will now be described in more detail. Basically, brake operating mechanism 23 is designed to actuate the disc brake caliper 21 to apply a forcible gripping action on brake disc 22 to stop rotation of front wheel 17. Brake operating mechanism 23 basically includes a brake lever 80, a hydraulic or master cylinder 81, a hydraulic or master piston 82, and an actuation fluid reservoir 83.

Preferably, brake operating mechanism 23 is a single unit which is mounted on handlebar 15. In particular, brake lever 80 includes a mounting portion 84 and a lever portion 85. Mounting portion 84 is designed to be clamped onto handle bar 15 in a conventional manner. Mounting portion 84 is integrally formed with master cylinder 81 such that master cylinder 81, master piston 82 and actuation fluid reservoir 83 are all supported on mounting portion 84 of brake lever 80. Lever portion 85 is pivotally coupled to mounting portion 84 for movement between a release position and a braking position. Normally, lever portion 84 is maintained in a release position in a conventional manner.

Master piston 82 is movably mounted within master cylinder 81 in a conventional manner. More specifically, actuation fluid reservoir 83 is mounted on master cylinder 81 and in fluid communication with the interior bore of master cylinder 81 for supplying actuation fluid thereto. Master piston 82 is connected at one end to lever portion 85 for axially moving master piston 82 within master cylinder 81. Accordingly, actuation of lever portion 85 causes master piston 82 to move axially within master cylinder 81. This movement of master piston 82 within master cylinder 81 directs fluid pressure through a hydraulic line 86 which is coupled to disc brake caliper 21. Thus, the pressurized actuation fluid causes the pistons 74 and friction pads 76 to move so as to engage brake disc 22 to stop rotation of wheel 17.

### SECOND EMBODIMENT

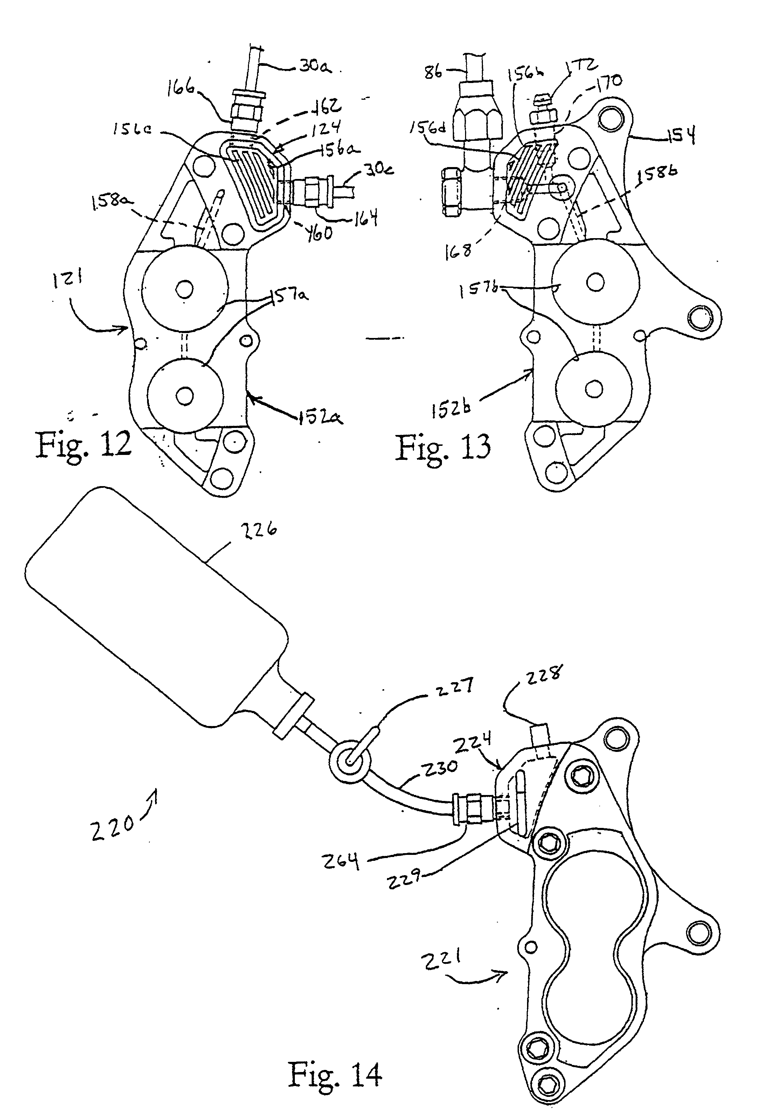

Referring now to Figures 12 and 13, a modified disc brake caliper 121 is illustrated in accordance with the present invention. Disc brake caliper 121 is designed to be utilized in fluid cooled disc brake assembly 12, discussed above. In fact, disc brake caliper 121 is substantially identical to disc brake caliper 21 except that disc brake caliper 121 has its cooling cavities or areas 156a and 156b provided with an internal conduit path and coolant member 124 is integrally formed with a portion of disc brake caliper 121. Of course, it will be apparent to those skilled in the art from this disclosure that coolant member 124 can be a separable member which is fixedly coupled to disc brake caliper 121 to create a coolant heat sink which transfers heat away from disc brake caliper 21. More specifically, baffles 156c and 156d are formed within coolant cavities or areas 156a and 156b, respectively. In view of the similarities between disc brake caliper 21 and 121, disc brake caliper 121 and its connection to cooling system 20 will not be discussed or illustrated in detail herein.

Housing 150 is preferably constructed of a heat conductive material, which can readily transfer the heat to the coolant. For example, housing 150 can be constructed of aluminum. Housing 150 includes a first housing half 152a and a second housing half 152b which are bolted together in a conventional manner. For all practical purposes, first and second housing halves 152a and 152b are substantially identical in construction, except that housing half 152a has coolant system 20 attached thereto, and second housing half 152b has brake operating mechanism 23 attached thereto for supplying an actuating fluid to first and second housing halves 152a and 152b. Also, second housing half 152b has a pair of outwardly extending flanges that form a mounting member 154 for bolting disc brake caliper 121 to fork 16 of bicycle 10. When housing halves 152a and 152b are bolted together, a disc brake slot is formed therebetween for receiving brake disc 121 therebetween.

First housing half 152a. has a coolant cavity or area 156a, a pair of circular piston recesses 157a and an internal fluid actuating passage 158a. Likewise, second housing half 152b has a coolant cavity or area 156a, a pair of piston receiving recesses 157b and an internal fluid actuating passage 158b. Cavities or areas 156a and 156b form a large coolant chamber. Preferably, coolant member 124 can hold at least approximately ten cubic centimeters to approximately twenty cubic centimeters.

Coolant cavity or area 156a is a large chamber having an inlet opening 160 and an outlet opening 162. Inlet opening 160 is preferably a threaded hole, which receives a connector 164 to connect conduit 30c thereto. Outlet opening 162 is also preferably a threaded bore having an outlet connector 166 coupled thereto to connect conduit 30a thereto. Connectors 164 and 166 are preferably provided with one-way valves or check valves that allow the fluid or coolant to pass into coolant cavities 156a and 156b through inlet opening 160 and out of coolant cavities 156a and 156b via outlet opening 162.

Internal fluid actuating passage 158a extends between circular piston recesses 157a and internal fluid actuating passage 158b of second housing half 152b. In other words, the actuating fluid from brake operating mechanism 23 flows into second housing half 152b and then into internal fluid actuating passages 58a and 158b to operate the piston unit.

Second housing half 152b has a first threaded opening 168, which is in fluid communication with internal fluid actuating passage 158b. Opening 168 is designed for attaching a hydraulic or actuating fluid conduit thereto. A second opening 170 is also provided for threadedly receiving a bleed nipple 172. Opening 170 is in fluid communication with internal fluid actuating passage 158b such that excess air can be removed from the actuating system. Internal fluid actuating passage 158b interconnects piston recesses 157b together for receiving actuating fluid or hydraulic fluid to activate the piston unit.

### THIRD EMBODIMENT

Referring now to Figure 14, a simplified cooling system 220. Basically, cooling system 220 includes coolant member 224, coolant bottle or tank 226, an on/off valve 227 and a pressure release valve 228. Disc brake caliper 221 is substantially identical to disc brake caliper 21 discussed above, except that a coolant gauge 229 has been added to the integral coolant member 224 to visually inspect the amount of coolant or water contained within coolant member 224.

In view of the similarities between disc brake caliper 221 and disc brake caliper 21 of the first embodiment, disc brake caliper 221 will not be discussed or illustrated in detail herein. Moreover, it will be apparent to those skilled in the art from this disclosure that disc brake caliper 221 can be utilized on bicycle 10 of the first embodiment so as to be operated by brake operating mechanism 23 of the first embodiment to engage brake disc 22.

In this embodiment, cooling system 220 is designed such that the rider can manually add water or coolant periodically to coolant member 224. More specifically, the water or coolant within coolant member 224 will be heated when the friction pads engage brake disc 22. The heated water or coolant will turn into steam or coolant vapor if the brake disc caliper 221 gets too hot. This steam will open pressure release valve 228 such that the water or coolant vapor is released. Thus, the amount of coolant within coolant member 224 will gradually be reduced. The rider then can look at coolant gauge 229 to determine when coolant needs to be added. The rider will then open the on/off valve 227 to allow additional water of coolant from coolant bottle 226 to flow through conduit 230 into coolant member 224.

Water or coolant bottle 226 can be attached to any portion of the frame as needed and/or desired. For example, water bottle 226 can be attached to the front fork 16 of bicycle 10 in the same location as radiator 26 of the first embodiment of Figure 1. Preferably, the location of water bottle 226 is such that the rider can operate on/off valve 227 without stopping. Moreover, water bottle 226, valve 227 and conduit 230 are preferably easily detachable from coolant member 224 such that they can be replaced if damaged. A one-way valve 264 preferably connects conduit 230 to the inlet opening of coolant member 224.

### FOURTH EMBODIMENT

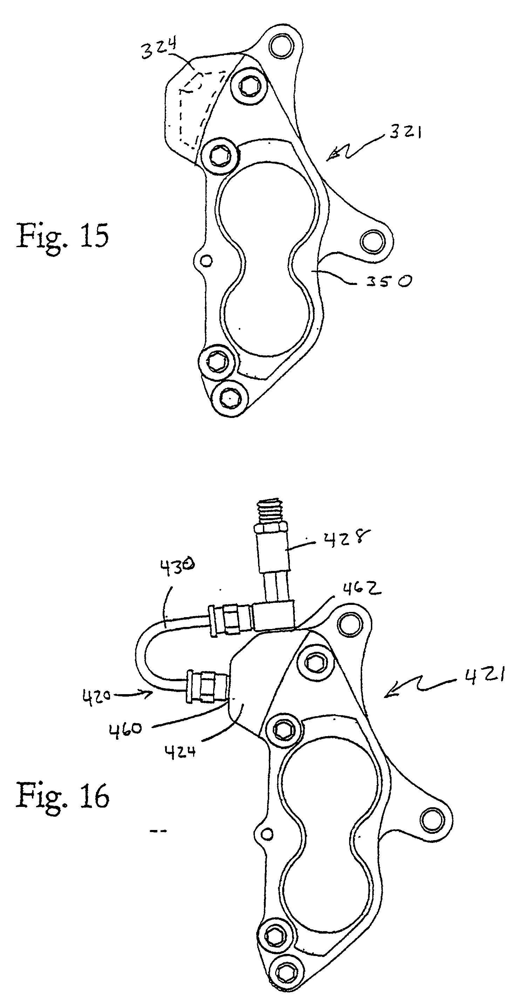

As seen in Figure 15, a modified disc brake caliper 321 is illustrated. Disc brake caliper 321 is substantially identical to disc brake caliper 21 of the first embodiment except that the internal coolant member 324 is a closed unit, which has a high specific heat gel located therein. While coolant member 324 is illustrated as being detachable, it will be apparent to those skilled in the art from this disclosure that coolant member 324 can be made integral with housing 350. Thus, this system is a simplified version of the first embodiment. The high specific heat gel located in coolant member 324 can be any high specific heat gel, which can operate under the normal operating conditions of a bicycle disc brake.

In view of the similarities between disc brake caliper 321 and disc brake caliper 21 of the first embodiment, disc brake caliper 321 will not be discussed or illustrated in detail herein. Moreover, it will be apparent to those skilled in the art from this disclosure that disc brake caliper 321 can be utilized on bicycle 10 of the first embodiment so as to be operated by brake operating mechanism 23 of the first embodiment to engage brake disc 22.

### FIFTH EMBODIMENT

Referring now to Figure 16, a modified disc brake caliper 421 is illustrated in accordance with the present invention. In this embodiment, the coolant inlet opening 460 and coolant outlet opening 462 are interconnected together via a transparent conduit 430. This transparent conduit 430 allows the rider to inspect the coolant level within the coolant member 424. Also, a pressure release valve/refill valve 428 has been added such that additional coolant or fluid can be added as needed and/or steam or coolant vapor be released from the coolant member 424.

Disc brake caliper 421 is substantially identical to disc brake caliper 21 except that disc brake caliper 421 has transparent conduit 430 extending between its inlet opening 460 and coolant outlet opening 462 and pressure release valve/refill valve 428 has been added. In view of the similarities between disc brake caliper 421 and disc brake caliper 21 of the first embodiment, brake disc caliper 421 will not be discussed or illustrated in detail herein.

In this embodiment, cooling system 420 is designed such that the rider can manually add water or coolant periodically to coolant member 424 via pressure release valve/refill valve 428. More specifically, the water or coolant within coolant member 424 will be heated when the friction pads engage brake disc 22. The heated water or coolant will turn into steam or coolant vapor if the disc brake caliper 421 gets too hot. This steam will open pressure release valve/refill valve 428 such that the water or coolant vapor is released. Thus, the amount of coolant within coolant member 424 will gradually be reduced. The rider then can look at transparent conduit 430 to determine when coolant needs to be added. The rider will then add additional water of coolant to coolant member 424 via pressure release valve/refill valve 428.

### SIXTH EMBODIMENT

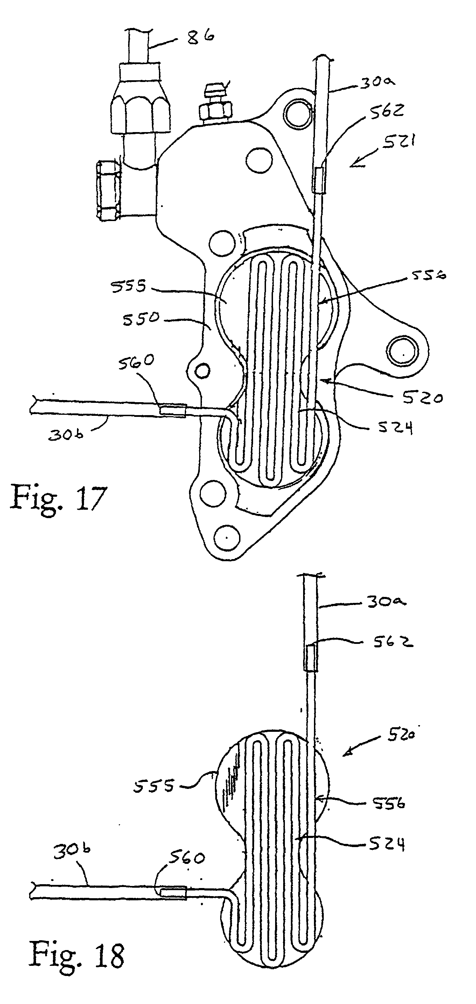

Referring now to Figures 17 and 18, a modified disc brake caliper 521 is illustrated in accordance with the present invention. In embodiment, a detachable and replaceable cooling system or unit 520 is fixedly attached to the disc brake caliper 521. Cooling system or unit 520 includes a mounting member 555 with a piping system 556 fixedly secured thereto. Piping system 556 forms the coolant member 524.

Mounting member 555 is shaped for mounting on housing 550 of disc brake caliper 521. Mounting member 555 can be secured to housing 550 in a variety of ways. For example, mounting plate 550 can be fastened to housing 550 via adhesive, straps, bolts, rivets or any other suitable fasteners. In any event, mounting member 555 contacts housing 550 such that heat can be readily transferred from housing 550 to mounting member 555 which in turn transfers the heat to piping system 556. The coolant passing through, piping system 556 removes the heat from housing 550, mounting member 555 and piping system 556. In this embodiment, piping system 556 has an inlet opening 560 and an outlet opening 562.

The piping system 556 is looped back and forth between inlet opening 560 and outlet opening 562 to create a coolant chamber 524 therebetween. Inlet opening 560 is connected to an external conduit path via conduit 30b, while outlet opening 562 is connected to an external conduit path via conduit 30a. Conduits 30a and 30b can be coupled to inlet and outlet openings 560 and 562 by one-way valves in the same manner as in the first embodiment, if needed and/or desired.

Cooling system or unit 520 can be used with the pump 25 and/or radiator 26 of the first embodiment as needed and/or desired. Alternatively, it will be apparent to those skilled in the art from this disclosure that pump 25 and/or radiator 26 can be eliminated. For example, the conduit path can be set up as a "coffee percolator" such that the coolant is self-circulating through coolant member 524. Cooling system or unit 520 is especially adapted for use as a self-circulating system in that the outlet opening 562 is located higher than the inlet opening 560. This arrangement allows the coolant to percolate through coolant member 524.

Disc brake caliper 521 is substantially identical to disc brake caliper 21 of the first embodiment except that the internal coolant member 24 of the first embodiment has been replaced with an external cooling system or unit 520. In view of the similarities between disc brake caliper 521 and disc brake caliper 21 of the first embodiment, disc brake caliper 521 will not be discussed or illustrated in detail herein. Moreover, brake operating mechanism 23 or the first embodiment is designed to be attached to housing 550 for supplying an actuating fluid to the first and second halves of housing 550 in substantially the same manner as in the first embodiment. In other words, conduit 86 of the brake operating mechanism 23 is attached to the housing 550 in a conventional manner to supply actuating fluid thereto for selectively gripping brake disc 22.

### SEVENTH EMBODIMENT

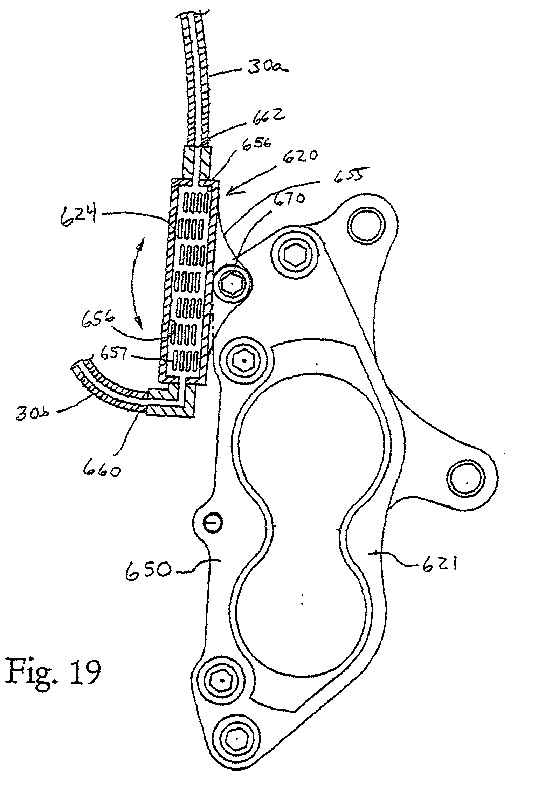

Referring now to Figure 19, a modified disc brake caliper 621 is illustrated in accordance with the present invention. In this embodiment, a detachable and replaceable cooling system or unit 620 is fixedly attached to the disc brake caliper 621. Cooling system or unit 620 includes a mounting member or an attachment portion 655 and an elongated coolant portion or member 624. Cooling system or unit 620 is adjustably mounted to housing 650 via a mounting bolt 670. Preferably, coolant member 624 is normally adjusted to be oriented in a substantially vertical direction relative to the ground. In particular, the mounting member 655 is a flange with a hole for receiving bolt 670 therethrough to adjustably secure coolant member 624 thereto.

As seen in Figure 19, coolant member 620 has an internal coolant area 656, a lower inlet opening 660 and an upper outlet opening 662. In this embodiment, internal coolant area 656 of coolant member 624 has a plurality of internal baffles 657. The lower inlet opening 660 is located at a first longitudinal end of coolant member 624, while the upper outlet opening 662 is located at a second longitudinal end of coolant member 624. Inlet opening 660 is connected to an external conduit path via conduit 30b, while outlet opening 662 is connected to an external conduit path via conduit 30a. Conduits 30a and 30b can be coupled to inlet and outlet openings 560 and 562 by one-way valves in the same manner as in the first embodiment, if needed and/or desired.

As mentioned above, coolant member 624 is angularly adjustable relative to the bicycle disc brake caliper 621 to position its outlet opening 662 substantially perpendicular relative to ground, when attachment portion 655 is coupled to bicycle disc brake caliper 621. Cooling system or unit 620 can be used with pump 25 and/or radiator 26 of the first embodiment as needed/desired. Alternatively, it will be apparent to those skilled in the art from this disclosure that pump 25 and/or radiator 26 can be eliminated. For example, this design is especially useful in creating a conduit path that can be set up as a "coffee percolator" such that the coolant is self-circulating through coolant member 624. Cooling system or unit 620 is especially adapted for use as a self-circulating system in that the outlet opening 662 is located higher than the inlet opening 660. This arrangement allows the coolant to percolate through coolant member 624.

Disc brake caliper 621 is substantially identical to disc brake caliper 21 of the first embodiment except that the internal coolant member 24 of the first embodiment has been replaced with an external cooling system or unit 620. In view of the similarities between disc brake caliper 621 and disc brake caliper 21 of the first embodiment, disc brake caliper 621 will not be discussed or illustrated in detail herein. Moreover, brake operating mechanism 23 or the first embodiment is designed to be attached to housing 650 for supplying an actuating fluid to the first and second halves of housing 650 in substantially the same manner as in the first embodiment. In other words, conduit 86 of the brake operating mechanism 23 is attached to the housing 650 in a conventional manner to supply actuating fluid thereto for selectively gripping brake disc 22.

While several embodiments have been chosen to illustrate the present invention, it will be apparent to those skilled in the art from this disclosure that various changes and modifications can be made herein without departing from the scope of the invention as defined in the appended claims. Furthermore, the foregoing description of the preferred embodiments of the present invention is provided for illustration only; and not for the purpose of limiting the invention as defined by the appended claims and their equivalents.

Summarized, a bicycle disc brake caliper 21 is provided with a detachable cooling system 20 that transfers heat away from the actuating fluid. Basically, the bicycle disc brake caliper 21 has a housing and a piston unit, with a coolant member 24 of the cooling system 20 attached to the housing. The housing has a frame mounting member sized to be coupled to a portion of a bicycle frame. The piston unit is movably coupled to the housing between the release position, in which the piston unit is spaced from a brake disc 22 mounted to a wheel of a bicycle 17, and a braking position, in which the piston unit engages the brake disc 22 of the bicycle wheel 17. The coolant member 24 has a coolant area for receiving coolant to create a coolant heat sink that transfers heat from the housing. Th ehousing has an actuating passage in fluid communication with the piston unit to move the piston unit via an actuating fluid. In one embodiment, a coolant or water bottle is attached to the coolant member 24 for manually adding coolant thereto. In another embodiment, the coolant member 24 is filled with a high specific heat gel.

## Claims

1. A detachable fluid cooling system for a bicycle *disc* brake caliper (21; 121; 221; 321; 421; 521; 621), comprising:
an attachment portion sized to be detachable coupled to the bicycle disc brake caliper (21; 121; 221; 321; 421; 521; 621); and
a coolant portion (24; 124; 224, 324; 424; 524; 624) coupled to said attachment portion to contact the bicycle disc brake caliper (21; 121; 221; 321; 421; 521; 621) for transferring heat from the bicycle disc brake caliper (21; 121; 221; 321; 421; 521; 621), said coolant portion (24; 124; 224, 324; 424; 524; 624) having an internal coolant area (56a, 56b; 156a, 156b) for containing coolant.

2. A detachable fluid cooling system according to claim 1, **characterized in that** said coolant portion (24; 124; 424; 524; 624) includes a first opening (60; 160; 460; 560; 660) to fill said coolant area (56a, 56b; 156a, 156b) with coolant.

3. A detachable fluid cooling system according to claim 2, **characterized in that** said coolant portion (24; 124; 424; 524; 624) includes a second opening (62; 162; 462; 562; 662) to permit said coolant to exit said coolant area (56a, 56b; 156a, 156b).

4. A detachable fluid cooling system according to claim 3, further comprising a coolant path extends between said first (60; 160; 460; 560; 660) and second (62; 162; 462; 562; 662) openings.

5. A detachable fluid cooling system according to claim 4, **characterized in that** said coolant path includes a radiator (26) to dissipate heat from coolant passing therethrough.

6. A detachable fluid cooling system according to claim 4 or 5, **characterized in that said cooling path** further **includes a pump (25) to circulate** coolant through said coolant area (56a, 56b; 156a, 156b).

7. A detachable fluid cooling system according to one of the preceding claims, **characterized in that** said coolant portion (524) includes a piping system and an attachment member (555).

8. A detachable fluid cooling system according to claim 6 or 7, **characterized in that said pump (25) includes a temperature sensor (44) mounted to a** housing for at least partially controlling activation and deactivation of said pump (25).

9. A detachable fluid cooling system according to one of the preceding claims 6 to 8, **characterized in that said pump (25) includes a three position** switch (42) for selecting an on position, a temperature sensing position and an off position.

10. A detachable fluid cooling system according to one of the preceding claims 6 to 9, **characterized in that** said pump (25) is driven by an electric motor (36).

11. A detachable fluid cooling system according to claim 10, **characterized in that** said electric motor (36) is battery (40) operated.

12. A detachable fluid cooling system according to claim 3, **characterized in that** a fluid conduit (430) extends directly between said first (460) and second openings (462) with at least a portion of said conduit (430) being transparent.

13. A detachable fluid cooling system according to claim 12, **characterized in that** said coolant portion (424) further includes a third opening in fluid communication therewith, said third opening having a pressure release valve (428) therein.

14. A detachable fluid cooling system according to claim 1, **characterized in that** said coolant portion (324) being a closed system with a high specific heat gel located in said coolant area.

15. A detachable fluid cooling system according to one of claims 1 to 14, further comprising a coolant reservoir (226) fluidly coupled to said coolant area of said coolant portion (224).

16. A detachable fluid cooling system according to claim 15, further comprising a valve (227) disposed between said coolant reservoir (226) and said coolant area of said coolant portion (224).

17. A detachable fluid cooling system according to claims 15 or 16, **characterized in that** said coolant reservoir (226) is a lightweight water bottle with a flexible conduit (230) extending between said water bottle (226) and said coolant portion (224).

18. A detachable fluid cooling system according to claim 16 or 17, **characterized in that** said valve (227) has a manually operable lever to selectively supply coolant from said coolant reservoir (226) to said coolant area of said coolant portion (224).

19. A detachable fluid cooling system according to one of claims 1 to 18, **characterized in that** said coolant portion (224) has an inlet opening with a one-way valve (264) coupled thereto and an outlet opening with a pressure release valve (229) coupled thereto.

20. A detachable fluid cooling system according to one of claims 1 to 19, **characterized in that** said coolant portion (224) includes a coolant level gauge (229) coupled thereto.

21. A detachable fluid cooling system according to one of claims 3 to 20, **characterized in that** said attachment portion (655) being angularly adjustable relative to the bicycle disc brake caliper (621) to position said second opening (662) substantially perpendicular relative to ground when said attachment portion (655) is coupled to the bicycle disc brake caliper (621).

22. A detachable fluid cooling system according to claim 21, **characterized in that** said attachment portion (655) includes a flange adapted to be adjustably coupled to the bicycle disc brake caliper (621).

23. A detachable fluid cooling system according to one of claims 3 to 22, **characterized in that** said coolant portion (124) is an elongated member with said first opening (160) at a first longitudinal end and said second opening (162) at a second longitudinal end.

24. A detachable fluid cooling system according to one of claims 1 to 23, **characterized in that** said coolant portion (124) includes internal baffles (156c, 156d).

25. A detachable fluid cooling system according to one of claims 3 to 24, **characterized in that** an external coolant path extends between said first (160) and second openings (162).

## Patentansprüche

1. Abnehmbares Fluidkühlsystem für einen Fahrradscheibenbremsensattel (21; 121; 221; 321; 421; 521; 621), umfassend:
einen Befestigungsteil, der dafür bemessen ist, mit dem Fahrradscheibenbremsensattel (21; 121; 221; 321; 421; 521; 621) abnehmbar gekoppelt zu werden; und
einen Kühlmittelteil (24; 124; 224; 324; 424; 524; 624), der mit dem Befestigungsteil gekoppelt ist, um mit dem Fahrradscheibenbremsensattel (21; 121; 221; 321; 421; 521; 621) zum Übertragen von Wärme vom Fahrradscheibenbremsensattel (21; 121; 221; 321; 421; 521; 621) in Kontakt zu kommen, wobei der Kühlmittelteil (24; 124; 224; 324; 424; 524; 624) eine interne Kühlmittelzone (56a, 56b; 156a, 156b) zum Enthalten von Kühlmittel aufweist.

2. Abnehmbares Fluidkühlsystem gemäß Anspruch 1, **dadurch gekennzeichnet, dass** der Kühlmittelteil (24; 124; 424; 524; 624) eine erste Öffnung (60; 160; 460; 560; 660) zum Füllen der Kühlmittelzone (56a, 56b; 156a, 156b) mit Kühlmittel enthält.

3. Abnehmbares Fluidkühlsystem gemäß Anspruch 2, **dadurch gekennzeichnet, dass** der Kühlmittelteil (24; 124; 424; 524; 624) eine zweite Öffnung (62; 162, 462; 562; 662) enthält, um dem Kühlmittel zu gestatten, die Kühlmittelzone (56a, 56b; 156a, 156b) zu verlassen.

4. Abnehmbares Fluidkühlsystem gemäß Anspruch 3, weiter umfassend einen Kühlmittelpfad, der sich zwischen der ersten (60; 160; 460; 560; 660) und der zweiten (62; 162; 462; 562; 662) Öffnung erstreckt.

5. Abnehmbares Fluidkühlsystem gemäß Anspruch 4, **dadurch gekennzeichnet, dass** der Kühlmittelpfad einen Radiator (26) zum Abstrahlen von Wärme aus durch ihn hindurch laufendem Kühlmittel enthält.

6. Abnehmbares Fluidkühlsystem gemäß Anspruch 4 oder 5, **dadurch gekennzeichnet, dass** der Kühlmittelpfad weiterhin eine Pumpe (25) zum Umwälzen von Kühlmittel durch die Kühlmittelzone (56a, 56b; 156a, 156b) enthält.

7. Abnehmbares Fluidkühlsystem gemäß einem der vorhergehenden Ansprüche, **dadurch gekennzeichnet, dass** der Kühlmittelteil (524) ein Leitungssystem und ein Befestigungselement (555) enthält.

8. Abnehmbares Fluidkühlsystem gemäß Anspruch 6 oder 7, **dadurch gekennzeichnet, dass** die Pumpe (25) einen an einem Gehäuse angebrachten Temperatursensor (44) zum zumindest teilweisen Steuern einer Aktivierung und Deaktivierung der Pumpe (25) enthält.

9. Abnehmbares Fluidkühlsystem gemäß einem der vorstehenden Ansprüche 6 bis 8, **dadurch gekennzeichnet, dass** die Pumpe (25) einen Dreilagenschalter (42) zum Auswählen einer Einschaltposition, einer Temperaturmessposition und einer Ausschaltposition enthält.

10. Abnehmbares Fluidkühlsystem gemäß einem der vorstehenden Ansprüche 6 bis 9, **dadurch gekennzeichnet, dass** die Pumpe (25) durch einen Elektromotor (36) angetrieben ist.

11. Abnehmbares Fluidkühlsystem gemäß Anspruch 10, **dadurch gekennzeichnet, dass** der Elektromotor (36) mit einer Batterie (40) betrieben ist.

12. Abnehmbares Fluidkühlsystem gemäß Anspruch 3, **dadurch gekennzeichnet, dass** sich ein Fluidleiter (430) direkt zwischen der ersten (460) und der zweiten Öffnung (462) erstreckt, wobei zumindest ein Teil des Leiters (430) transparent ist.

13. Abnehmbares Fluidkühlsystem gemäß Anspruch 12, **dadurch gekennzeichnet, dass** der Kühlmittelteil (442) weiterhin eine dritte Öffnung in Fluidverbindung mit ihm enthält, wobei die dritte Öffnung in sich ein Druckentlastungsventil (428) aufweist.

14. Abnehmbares Fluidkühlsystem gemäß Anspruch 1, **dadurch gekennzeichnet, dass** der Kühlmittelteil (324) ein geschlossenes System mit einem in der Kühlmittelzone befindlichen hochspezifischen Heißgel ist.

15. Abnehmbares Fluidkühlsystem gemäß einem der Ansprüche 1 bis 14, weiterhin umfassend ein Kühlmittelreservoir (226), das mit der Kühlmittelzone des Kühlmittelteils (224) fluidgekoppelt ist.

16. Abnehmbares Fluidkühlsystem gemäß Anspruch 15, weiterhin umfassend ein zwischen dem Kühlmittelreservoir (226) und der Kühlmittelzone des Kühlmittelteils (224) angeordnetes Ventil (227).

17. Abnehmbares Fluidkühlsystem gemäß Anspruch 15 oder 16, **dadurch gekennzeichnet, dass** das Kühlmittelreservoir (226) eine Leichtwasserflasche ist, wobei sich ein flexibler Leiter (230) zwischen der Wasserflasche (226) und dem Kühlmittelteil (224) erstreckt.

18. Abnehmbares Fluidkühlsystem gemäß Anspruch 16 oder 17, **dadurch gekennzeichnet, dass** das Ventil (227) einen manuell bedienbaren Hebel zum selektiven Zuführen von Kühlmittel vom Kühlmittelreservoir (226) zur Kühlmittelzone des Kühlmittelteils (224) aufweist.

19. Abnehmbares Fluidkühlsystem gemäß einem der Ansprüche 1 bis 18, **dadurch gekennzeichnet, dass** der Kühlmittelteil (224) eine Einlassöffnung mit einem daran gekoppelten Einwegventil (264) und eine Auslassöffnung mit einem daran gekoppelten Druckentlastungsventil (229) aufweist.

20. Abnehmbares Fluidkühlsystem gemäß einem der Ansprüche 1 bis 19, **dadurch gekennzeichnet, dass** der Kühlmittelteil (224) einen daran gekoppelten Kühlmittelpegelmesser (229) beinhaltet.

21. Abnehmbares Fluidkühlsystem gemäß einem der Ansprüche 3 bis 20, **dadurch gekennzeichnet, dass** der Befestigungsteil (655) in einem Winkel relativ zum Fahrradscheibenbremsensattel (621) einstellbar ist, um die zweite Öffnung (662) im wesentlichen rechtwinklig zum Boden zu positionieren, wenn der Befestigungsteil (655) am Fahrradscheibenbremsensattel (621) angekoppelt ist.

22. Abnehmbares Fluidkühlsystem gemäß Anspruch 21, **dadurch gekennzeichnet, dass** der Befestigungsteil (655) einen Flansch beinhaltet, der dafür ausgelegt ist, einstellbar mit dem Fahrradscheibenbremsensattel (621) gekoppelt zu sein.

23. Abnehmbares Fluidkühlsystem gemäß einem der Ansprüche 3 bis 22, **dadurch gekennzeichnet, dass** der Kühlmittelteil (124) ein längliches Element mit der ersten Öffnung (160) an einem ersten Längsende und der zweiten Öffnung (162) an einem zweiten Längsende ist.

24. Abnehmbares Fluidkühlsystem gemäß einem der Ansprüche 1 bis 23, **dadurch gekennzeichnet, dass** der Kühlmittelbereich (124) interne Zwischenwände (156c, 156d) enthält.

25. Abnehmbares Fluidkühlsystem gemäß einem der Ansprüche 3 bis 24, **dadurch gekennzeichnet, dass** sich ein externer Kühlmittelpfad zwischen der ersten (160) und der zweiten Öffnung (162) erstreckt.

## Revendications

1. Système amovible de refroidissement par un fluide destiné à un étrier (21 ; 121 ; 221 ; 321 ; 421 ;521 **;** 621) de frein à disque de bicyclette, comprenant :
une partie de fixation ayant une dimension telle qu'elle peut être couplée de façon amovible à l'étrier (21 ; 121 ; 221 ; 321 ; 421 ; 521 ; 621) de frein à disque de bicyclette, et
une partie de fluide de refroidissement (24 ; 124 ; 224 ; 324 ; 424 ; 524 ; 624) couplée à la partie de fixation et destinée à être au contact de l'étrier (21 ; 121 ; 221 ; 321 ; 421 ; 521 ; 621) de frein à disque de bicyclette pour le transfert de chaleur de l'étrier (21 ; 121 ; 221 ; 321 ; 421 ; 521 ; 621) de frein à disque de bicyclette, la partie à fluide de refroidissement (24 ; 124 ; 224 ; 324 ; 424 ; 524 ; 624) ayant une région interne de fluide de refroidissement (56a, 56b ; 156a, 156b) destinée à contenir un fluide de refroidissement.

2. Système amovible de refroidissement par un fluide selon la revendication 1, **caractérisé en ce que** la partie de fluide de refroidissement (24 ; 124 ; 424 ; 524 ; 624) comporte une première ouverture (60 ; 160 ; 460 ; 560 ; 660) destinée au remplissage de la région de fluide de refroidissement (56a, 56b ; 156a, 156b) par un fluide de refroidissement.

3. Système amovible de refroidissement par un fluide selon la revendication 2, **caractérisé en ce que** la partie de fluide de refroidissement (24 ; 124 ; 424 ; 524 ; 624) comporte une seconde ouverture (62 ; 162 ; 462 ; 562 ; 662) destinée à permettre la sortie du fluide de refroidissement de la région de fluide de refroidissement (56a, 56b ; 156a, 156b).

4. Système amovible de refroidissement par un fluide selon la revendication 3, comprenant en outre un trajet de fluide de refroidissement qui s'étend entre la première ouverture (60 ; 160 ; 460 ; 560 ; 660) et la seconde ouverture (62 ; 162 ; 462 ; 562 ; 662).

5. Système amovible de refroidissement par un fluide selon la revendication 4, **caractérisé en ce que** le trajet de fluide de refroidissement comporte un radiateur (26) destiné à dissiper la chaleur du fluide de refroidissement qui circule à l'intérieur.

6. Système amovible de refroidissement par un fluide selon la revendication 4 ou 5, **caractérisé en ce que** le trajet de fluide de refroidissement comporte en outre une pompe (25) destinée à faire circuler le fluide de refroidissement dans la région de fluide de refroidissement (56a, 56b ; 156a, 156b).

7. Système amovible de refroidissement par un fluide selon l'une des revendications précédentes, **caractérisé en ce que** la partie de fluide de refroidissement (524) comporte un système à conduite et un organe de fixation (555).

8. Système amovible de refroidissement par un fluide selon la revendication 6 ou 7, **caractérisé en ce que** la pompe (25) comporte un capteur de température (44) monté sur un boîtier afin qu'il commande au moins partiellement l'activation et la désactivation de la pompe (25).

9. Système amovible de refroidissement par un fluide selon l'une des revendications précédentes 6 à 8, **caractérisé en ce que** la pompe (25) a un commutateur à trois positions (42) destiné à la sélection d'une position de fonctionnement, d'une position de détection de température et d'une position d'arrêt.

10. Système amovible de refroidissement par un fluide selon l'une des revendications précédentes 6 à 9, **caractérisé en ce que** la pompe (25) est entraînée par un moteur électrique (36).

11. Système amovible de refroidissement par un fluide selon la revendication 10, **caractérisé en ce que** le moteur électrique (36) fonctionne à partir d'une batterie (40).

12. Système amovible de refroidissement par un fluide selon la revendication 3, **caractérisé en ce qu'**un conduit de fluide (430) s'étend directement entre la première ouverture (460) et la seconde ouverture (462) et une partie au moins du conduit (430) est transparente.

13. Système amovible de refroidissement par un fluide selon la revendication 12, **caractérisé en ce que** la partie de fluide de refroidissement (424) comporte en outre une troisième ouverture qui communique avec elle pour la circulation du fluide, la troisième ouverture ayant une soupape de décharge de pression (428).

14. Système amovible de refroidissement par un fluide selon la revendication 1, **caractérisé en ce que** la partie de fluide de refroidissement (324) est un système fermé ayant un gel de chaleur spécifique élevée placé dans la région de fluide de refroidissement.

15. Système amovible de refroidissement par un fluide selon l'une des revendications précédentes 1 à 14, comprenant en outre un réservoir de fluide de refroidissement (226) couplé pour la circulation du fluide à la région de fluide de refroidissement de la partie de fluide de refroidissement (224).

16. Système amovible de refroidissement par un fluide selon la revendication 15, comprenant en outre une soupape (227) placée entre le réservoir de fluide de refroidissement (226) et la région de refroidissement de la partie de fluide de refroidissement (224).

17. Système amovible de refroidissement par un fluide selon la revendication 15 ou 16, **caractérisé en ce que** le réservoir de fluide de refroidissement (226) est une bouteille légère d'eau ayant un conduit souple (230) qui s'étend entre la bouteille d'eau (226) et la partie de fluide de refroidissement (224).

18. Système amovible de refroidissement par un fluide selon la revendication 16 ou 17, **caractérisé en ce que** la soupape (227) a un levier qui peut être commandé manuellement pour la transmission sélective d'un fluide de refroidissement du réservoir de fluide de refroidissement (226) à la région de fluide de refroidissement de la partie de fluide de refroidissement (224).

19. Système amovible de refroidissement par un fluide selon l'une des revendications 1 à 18, **caractérisé en ce que** la partie de fluide de refroidissement (224) a une ouverture d'entrée ayant un clapet de retenue (264) qui lui est couplé et une ouverture de sortie ayant une soupape de décharge de pression (229) qui lui est couplée.

20. Système amovible de refroidissement par un fluide selon l'une des revendications 1 à 19, **caractérisé en ce que** la partie de fluide de refroidissement (224) comporte une jauge (229) de niveau de fluide de refroidissement qui lui est couplée.

21. Système amovible de refroidissement par un fluide selon l'une des revendications 3 à 20, **caractérisé en ce que** la partie de fixation (655) est réglable angulairement par rapport à l'étrier (621) de frein à disque de bicyclette afin que la seconde ouverture (662) soit positionnée en direction pratiquement perpendiculaire au sol lorsque la partie de fixation (655) est couplée à l'étrier (621) de frein à disque de bicyclette.

22. Système amovible de refroidissement par un fluide selon la revendication 21, **caractérisé en ce que** la partie de fixation (655) comporte un flasque destiné à être couplé de façon réglable à l'étrier (621) de frein à disque de bicyclette.

23. Système amovible de refroidissement par un fluide selon l'une des revendications 3 à 22, **caractérisé en ce que** la partie de fluide de refroidissement (124) est un organe allongé ayant la première ouverture (160) à une première extrémité longitudinale et la seconde ouverture (162) a une seconde extrémité longitudinale.

24. Système amovible de refroidissement par un fluide selon l'une des revendications 1 à 23, **caractérisé en ce que** la partie de fluide de refroidissement (124) comprend des déflecteurs internes (156c, 156d).

25. Système amovible de refroidissement par un fluide selon l'une des revendications 3 à 24, **caractérisé en ce qu'**un trajet extérieur de fluide de refroidissement s'étend entre la première ouverture (160) et la seconde ouverture (162).
